# EUROPEAN PATENT APPLICATION

(11) **EP 4 451 642 A1**
(43) Date of publication of application: **23.10.2024**
(21) Application number: 22921461.4
(22) Date of filing: 05.08.2022
(51) Int. Cl.: H04L 61/5046

(54) **ADDRESS SPACE RECOMMENDATION METHOD AND APPARATUS, AND RELATED DEVICE**

(30) Priority: 24.01.2022 CN 202210081617
(71) Applicant: Huawei Cloud Computing Technologies Co., Ltd., Gui'an New District, Guizhou 550025 (CN)
(72) Inventor: YANG, Zengyin, Guizhou 550025 (CN); ZHU, Xiaoping, Guizhou 550025 (CN)
(74) Representative: Maiwald GmbH
(86) International application number: PCT/CN2022/110403
(87) International publication number: WO 2023/138032

(57) **Abstract**

This application discloses an address space recommendation method, including: obtaining an address space recommendation request sent by a client for a first VPC, where the address space recommendation request includes an identifier of a first alliance relationship; and determining, in response to the address space recommendation request, a first address space different from a second address space corresponding to a second VPC, where the first VPC and the second VPC have the first alliance relationship; and outputting the first address space to the client. Because the first address space that does not have an address conflict with another VPC in an alliance relationship may be automatically recommended for a VPC, a user does not need to manually configure an address space for the VPC. In this way, a difficulty of configuring the VPC by the user can be reduced, configuration efficiency can be improved, and a possibility of an error occurring during configuration of the VPC can be effectively reduced by configuring the VPC based on the automatically recommended first address space, to help establish an interconnection relationship between the VPC and the another VPC. In addition, this application further provides a corresponding apparatus and a related device.

## Description

This application claims priority to Chinese Patent Application No. 202210081617.5, filed with the China National Intellectual Property Administration on January 24, 2022 and entitled "ADDRESS SPACE RECOMMENDATION METHOD AND APPARATUS, AND RELATED DEVICE", which is incorporated herein by reference in its entirety.

### TECHNICAL FIELD

This application relates to the field of internet technologies, and in particular, to an address space recommendation method and apparatus, and a related device.

### BACKGROUND

As more cloud services are deployed, increasingly more users (such as enterprises) expect to implement interconnection between different virtual private clouds (virtual private cloud, VPC) around the world. The VPCs are used as an example. Generally, when the different VPCs are isolated from each other (that is, no data exchange exists between the VPCs), address spaces used by the different VPCs may overlap, including an internet protocol version 4 (Internet Protocol Version 4, IPv4) address space, an internet protocol version 6 (Internet Protocol Version 6, IPv6) address space, and/or the like. When the different VPCs are interconnected, it needs to be ensured that address spaces used by the different VPCs do not overlap, to avoid a problem that a data packet cannot be forwarded because the address spaces of the different VPCs overlap, for example, a loopback route occurs.

Currently, when creating/updating a VPC, a user usually manually configures a nonoverlapping address segment for the VPC based on an address space used by another VPC interconnected with the VPC, to avoid an address conflict. However, in an actual application scenario, there may be a large quantity of other VPCs interconnected with the VPC, for example, including dozens or even hundreds of VPCs. In this case, the user manually configures, for the VPC, an address space that does not have an address conflict with the other VPCs. Therefore, a configuration difficulty is high, configuration efficiency is low, and an error easily occurs during configuration of the address space of the VPC. Consequently, establishment of an interconnection relationship between the VPC and the anther VPC is affected.

### SUMMARY

Embodiments of this application provide an address space recommendation method and apparatus, and a related device, to reduce a VPC configuration difficulty, improve configuration efficiency, and reduce a possibility that an error occurs during address space configuration.

According to a first aspect, an embodiment of this application provides an address space recommendation method, and the method may be performed by, for example, an address space recommendation apparatus. Specifically, when recommending an available address space for a VPC, the address space recommendation apparatus first obtains an address space recommendation request sent by a client for a first VPC, where the address space recommendation request includes an identifier of a first alliance relationship, and determines, in response to the address space recommendation request, a first address space different from a second address space corresponding to a second VPC, where the first VPC and the second VPC have the first alliance relationship, so that the determined first address space does not overlap with the second address space. Finally, the address space recommendation apparatus outputs the first address space to the client.

When the VPC is created or updated, the address space recommendation apparatus may automatically recommend the first address space that does not have an address conflict with another VPC in an alliance relationship for the VPC, so that a user does not need to manually configure an address space for the VPC. In this way, a difficulty of configuring the VPC by the user can be reduced, configuration efficiency can be improved, and a possibility of an error occurring during configuration of the VPC can be effectively reduced by configuring the VPC based on the automatically recommended first address space, to help establish an interconnection relationship between the VPC and the another VPC.

In a possible implementation, the address space recommendation request further includes an address constraint condition. For example, if the address constraint condition may be specified by the user, the determined first address space satisfies the address constraint condition. In this way, the first address space automatically recommended to the user does not overlap with an address space corresponding to the another VPC in the alliance relationship, and the first address space further satisfies a requirement of the user, for example, satisfies a requirement of the user in terms of an address space size and an address prefix.

In a possible implementation, the address constraint condition indicates the address space size. When in response to the address space recommendation request, the address space recommendation apparatus may specifically determine a first available address space and a second available address space in the first alliance relationship based on the identifier of the first alliance relationship in the address space recommendation request, where a size of the first available address space is less than a size of the second available address space, and then preferentially determine the first address space from the first available address space based on the address constraint condition in the address space recommendation request. In this way, when a larger address space needs to be configured for the another VPC that is subsequently created/updated, the address space recommendation apparatus may allocate, from the relatively large second available address space, an address space required by the another VPC, to improve rationality of address space allocation and utilization of the address space.

In a possible implementation, the address space recommendation apparatus may further provide a configuration interface, where the configuration interface may be presented to the user via the client. Then, the address space recommendation apparatus may obtain the identifier of the first alliance relationship and the address constraint condition in response to a configuration operation performed by the user on the configuration interface for the first VPC. In this way, the address space recommendation apparatus may support flexible configuration of the VPC in the alliance relationship and the address constraint condition by the user. This improves user experience.

In a possible implementation, the address space recommendation request further includes an identifier of a second alliance relationship. The first address space determined by the address space recommendation apparatus does not overlap with an address space corresponding to each VPC in the first alliance relationship, and the first address space does not overlap with an address space corresponding to each VPC in the second alliance relationship. In this way, the address space automatically recommended by the address space recommendation apparatus for the VPC may have no address conflict in two alliance relationships in which communication exists.

In a possible implementation, the address space recommendation apparatus may further provide a recommendation interface, where the recommendation interface is presented to the user via the client, and the recommendation interface includes the first address space. In this way, the address space recommendation apparatus may present the determined first address space to the user, so that the user learns of the address space recommended for the VPC. This improves user experience.

In a possible implementation, the address space recommendation apparatus may further determine the second address space in response to a change operation performed by the user for the first address space. The second address space does not overlap with the first address space, and the second address space does not overlap with the address space corresponding to each VPC in the first alliance relationship. Then, the address space recommendation apparatus outputs the second address space to the client. In this way, after the user is dissatisfied with the previously recommended first address space, another available address space may be recommended to the user again, so that the re-recommended second address space can satisfy a use requirement of the user, thereby further facilitating the user to configure the address space for the VPC, and improving user experience.

According to a second aspect, based on a same inventive concept as the method embodiment of the first aspect, an embodiment of this application provides an address space recommendation apparatus. The apparatus has functions corresponding to the implementations of the first aspect. The function may be implemented by hardware, or may be implemented by hardware executing corresponding software. The hardware or the software includes one or more modules corresponding to the functions.

According to a third aspect, an embodiment of this application provides a computing device, including a processor and a memory. The memory is configured to store instructions. When the computing device runs, the processor executes the instructions stored in the memory, so that the computing device performs the address space recommendation method according to any one of the first aspect or the implementations of the first aspect. It should be noted that the memory may be integrated into the processor, or may be independent of the processor. An apparatus may further include a bus. The processor is connected to the memory through the bus. The memory may include a readable memory and a random-access memory.

According to a fourth aspect, an embodiment of this application further provides a readable storage medium. The readable storage medium stores a program or instructions. When the program or the instructions are run on a computer, the address space recommendation method according to any one of the first aspect or the implementations of the first aspect is performed.

According to a fifth aspect, an embodiment of this application further provides a computer program product including instructions. When the computer program product runs on a computer, the computer is enabled to perform the address space recommendation method according to any one of the first aspect or the implementations of the first aspect.

In addition, for technical effects brought by any implementation of the second aspect to the fifth aspect, refer to technical effects brought by different implementations of the first aspect, or refer to technical effects brought by different implementations of the second aspect. Details are not described herein again.

### BRIEF DESCRIPTION OF DRAWINGS

To describe technical solutions in embodiments of this application more clearly, the following briefly introduces accompanying drawings used for describing embodiments. It is clear that the accompanying drawings in the following descriptions show merely some embodiments of this application, and a person of ordinary skill in the art may still derive other drawings from these accompanying drawings.
FIG. 1 is a schematic diagram of a structure of an example address space recommendation system according to an embodiment of this application;
FIG. 2 is a schematic flowchart of an address space recommendation method according to an embodiment of this application;
FIG. 3 is a schematic diagram of an example configuration interface according to an embodiment of this application;
FIG. 4 is a schematic diagram of an IPv4 address format according to an embodiment of this application;
FIG. 5 is a schematic diagram of an example recommendation interface according to an embodiment of this application;
FIG. 6 is a schematic diagram of another example recommendation interface according to an embodiment of this application;
FIG. 7 is a schematic diagram of a structure of an address space recommendation apparatus according to an embodiment of this application; and
FIG. 8 is a schematic diagram of a hardware structure of a computing device according to an embodiment of this application.

### DESCRIPTION OF EMBODIMENTS

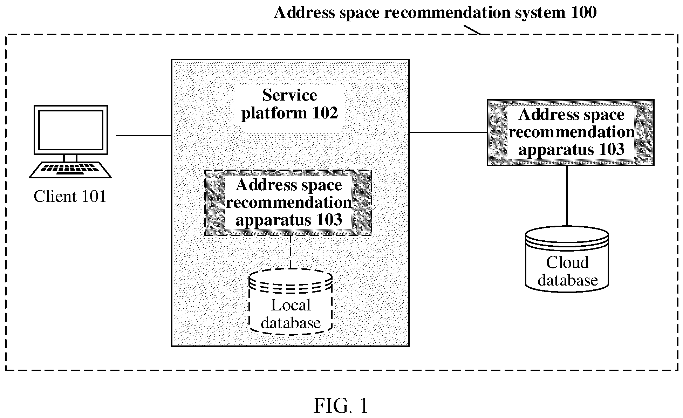

FIG. 1 is a schematic diagram of a structure of an example address space recommendation system. As shown in FIG. 1, the address space recommendation system 100 may include a client 101 and a service platform 102. In addition, data exchange may be performed between the client 101 and the service platform 102, for example, data communication is performed according to a hypertext transfer protocol (Hypertext Transfer Protocol, HTTP) or another network protocol.

The client 101 may be a network browser externally provided by the service platform 102, and is configured to interact with a user; or the client 101 may be an application (application) running on a user terminal, or the like. In the address space recommendation system 100, there may be one or more clients 101, which is not limited in this embodiment. The service platform 102 may be constructed by using one or more computing devices (such as servers). In actual application, the service platform 102 may further include another device such as a storage device. In FIG. 1, an example in which the service platform 102 is constructed by using a plurality of servers is used for description. In addition, the user may create a VPC or a microservice (microservice) on the service platform 102 via the client 101. The VPC refers to a private network created by the user. VPCs that are isolated from each other are not interconnected, and address spaces may completely overlap. However, address spaces of interconnected VPCs do not overlap. The microservice is a small service that is constructed based on services and can be independently deployed. One or more microservices may form an application.

Creating the VPC is used as an example. When a new VPC is created on the service platform 102, and the created VPC is interconnected with another VPC, the user usually needs to manually configure an address space for the VPC via the client 101, and the configured address space does not overlap with an address space used by the another VPC, to avoid an address conflict that affects data communication between VPCs. However, in actual application, there may be a large quantity of other VPCs interconnected with the newly created VPC. The user needs to learn of an address space corresponding to each VPC, and manually analyze an address space that does not overlap with the address space used by each VPC, to configure the address space for the newly created VPC. In this manner of manually configuring an available address space for the VPC, a configuration difficulty is high, configuration efficiency is low, and an error easily occurs during configuration of the address space of the VPC, for example, the configured address space is prone to partially overlap with an address space used by one of the VPCs. Consequently, establishment of an interconnection relationship between the VPC and the another VPC is affected.

Based on this, an embodiment of this application provides an address space recommendation method. The address space recommendation method may be performed by an address space recommendation apparatus 103. The address space recommendation apparatus 103 may be deployed on the service platform 102. For example, the address space recommendation apparatus 103 may be implemented by using software or hardware. When implemented by using the software, the address space recommendation apparatus 103 may be a computer program running on a computing device, for example, a software development kit (software development kit, SDK). When implemented by using the hardware, the address space recommendation apparatus 103 may be a computing device such as a server, and a computer program is run on the computing device, so that the address space recommendation apparatus 103 has a function of automatically recommending an address space. Alternatively, the address space recommendation apparatus 103 may be a device implemented by using an application-specific integrated circuit (application-specific integrated circuit, ASIC), a programmable logic device (programmable logic device, PLD), or the like. The PLD may be a complex programmable logical device (complex programmable logical device, CPLD), a field-programmable gate array (field-programmable gate array, FPGA), a generic array logic (generic array logic, GAL), or any combination thereof.

When the user requests to create or update the VPC via the client 101, the service platform 102 may receive an address space recommendation request sent by the client 101 for the VPC, where the address space recommendation request carries an identifier of an alliance relationship to which the VPC belongs. Then, the service platform 102 may invoke the address space recommendation apparatus 103 to respond to the address space recommendation request, determine a first address space different from a second address space corresponding to the another VPC in the alliance relationship, and output the first address space to the client 101, to automatically recommend an available address space for the newly created/updated VPC.

When the VPC is created or updated, the first address space that does not have an address conflict with the another VPC in the alliance relationship may be automatically recommended for the VPC, so that the user does not need to manually configure an address space for the VPC. In this way, a difficulty of configuring the VPC by the user can be reduced, configuration efficiency can be improved, and a possibility of an error occurring during configuration of the VPC can be effectively reduced by configuring the VPC based on the automatically recommended first address space, to help establish an interconnection relationship between the VPC and the another VPC.

It should be noted that, in the foregoing example, the address space recommendation apparatus 103 is deployed in the service platform 102. In actual application, the address space recommendation apparatus 103 may alternatively be deployed independently of the service platform 102, as shown in FIG. 1. In this case, when the user applies for creating/updating a VPC on the service platform 102 via the client 101, the service platform 102 may generate an address space recommendation request, send the address space recommendation request to the address space recommendation apparatus 103, and send a first address space fed back by the address space recommendation apparatus 103 to the client 101, to automatically recommend an available address space for the VPC. In addition, a database may be configured inside or outside the service platform 102. The database configured inside the service platform 102 may be referred to as a local database, and the database configured outside the service platform 102 may be referred to as a cloud database. In addition, the local database or the cloud database may be configured to store data, for example, store VPC information included in each alliance relationship, and remaining available address spaces corresponding to each alliance relationship.

It should be noted that the system architecture shown in FIG. 1 is merely used as an example, and is not intended to limit specific implementation of the system architecture to the example. For example, in another possible system architecture, the address space recommendation system 100 may further include more apparatuses with other functions, to provide richer functions for the service platform 102. This is not limited in this embodiment.

To make the objectives, features, and advantages of this application clearer and more comprehensible, the following describes various non-limiting implementations in embodiments of this application by using examples with reference to the accompanying drawings. It is clearly that the described embodiments are some rather than all of embodiments of this application. All other embodiments obtained by a person of ordinary skill in the art based on embodiments of this application without creative efforts shall fall within the protection scope of this application.

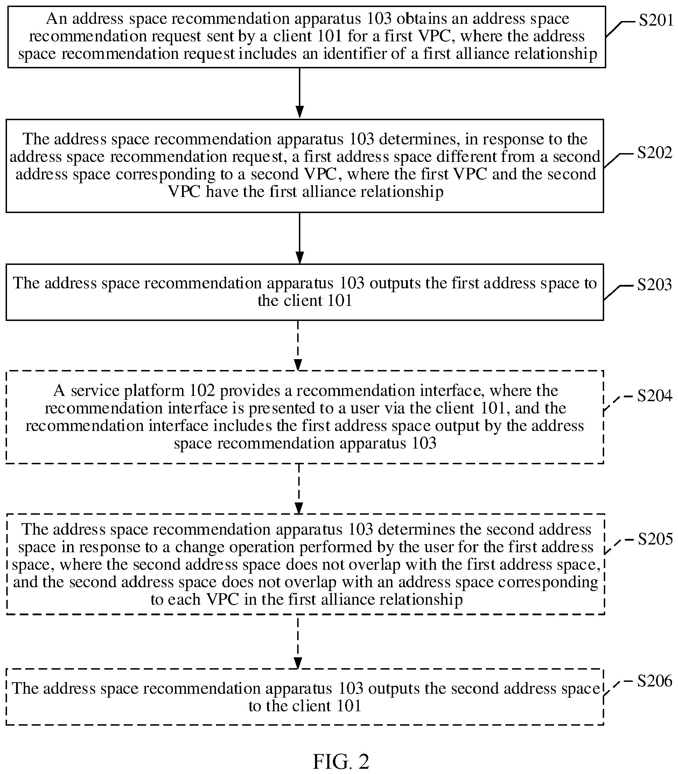

FIG. 2 is a schematic flowchart of an address space recommendation method according to an embodiment of this application. The method may be applied to the address space recommendation system 100 shown in FIG. 1, and may be performed by the address space recommendation apparatus 103 in the address space recommendation system 100. In actual application, the method may alternatively be applied to another applicable address space recommendation system. For ease of understanding and description, the following uses an example in which the address space recommendation apparatus 103 performs the method for description. The method may specifically include the following steps.

S201: The address space recommendation apparatus 103 obtains an address space recommendation request sent by a client 101 for a first VPC, where the address space recommendation request includes an identifier of a first alliance relationship.

In this embodiment, when a user creates/updates a VPC on a service platform 102 via the client 101, the service platform 102 may determine an available address space for the VPC by using the address space recommendation apparatus 103.

In actual application, the service platform 102 may provide an operation interface for the client 101, and present the operation interface to the user via the client 101. In this way, the user may apply for creating or updating the VPC on the operation interface. For ease of differentiation and description, creation or updating that is of the VPC and that is applied by the user is referred to as the first VPC in the following.

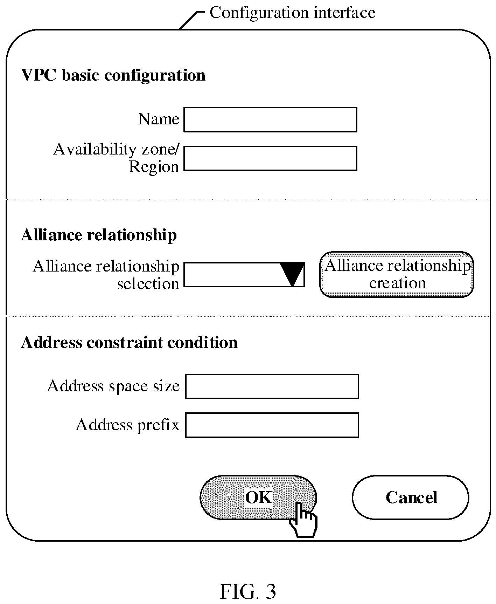

Then, based on a request of the user for creating/updating the first VPC, the service platform 102 may provide a configuration interface for the client 101, so that an interface presented by the client 101 is switched from the foregoing operation interface to the configuration interface. In this way, the user may perform a corresponding configuration operation for the first VPC on the configuration interface, and obtain an identifier of an alliance relationship to which the first VPC belongs. For example, the configuration interface presented by the client 101 may be shown in FIG. 3, and the user may input, on the configuration interface, a name of the first alliance relationship to which the to-be-created first VPC belongs. Before the first VPC is created, the first alliance relationship may include one or more VPCs, and the first alliance relationship may be created by the user, or may be pre-created by another user. Certainly, before the user creates the first alliance relationship, the user may alternatively create a new first alliance relationship on the configuration interface, for example, create a new alliance relationship by tapping an "Alliance relationship creation" control on the configuration interface. When the first VPC is added in the created first alliance relationship, the first VPC may be interconnected with another VPC in the first alliance relationship. In this embodiment, any VPCs belonging to a same alliance relationship may be interconnected, and correspondingly, address spaces used by different VPCs in the alliance relationship do not overlap. When the first VPC is created in the first alliance relationship, an address space allocated to the first VPC does not overlap with a second address space of another VPC (hereinafter referred to as a second VPC) in the first alliance relationship, to avoid affecting communication between the first VPC and the second VPC.

Then, the client 101 may send the identifier of the first alliance relationship configured by the user to the service platform 102, and the service platform 102 generates an address space recommendation request including the identifier of the first alliance relationship, and sends the address space recommendation request to the address space recommendation apparatus 103, to request the address space recommendation apparatus 103 to determine an available address space for the first VPC. In this embodiment, the address space refers to one or more internet protocol (Internet Protocol, IP)-based IP addresses, and may be specifically an IPv4 address and/or an IPv6 address.

Further, the user may further perform basic configuration on the first VPC on the configuration interface. As shown in FIG. 3, the user may configure a name of the VPC, an availability zone (availability zone) or a region (region) included in the VPC, and the like. In addition, the user may further input an address constraint condition on the configuration interface, to constrain an available address range of the first VPC. For example, the address constraint condition may indicate, for example, an address space size, and/or indicate a fixed prefix of an address. For example, the user may input an address prefix corresponding to the first VPC on the configuration interface shown in FIG. 3, to fix a prefix of addresses configured by the service platform 102 for the first VPC. For example, the user may configure a prefix of an IPv4 address corresponding to the first VPC as "192.16.X.X", so that a prefix of each IPv4 address subsequently configured by the service platform 102 for the first VPC is the same, for example, 192.16.0.0 to 192.16.255.255. In actual application, the user may further configure other information for the first VPC on the configuration interface, such as an address space size and an address type (such as an IPv4 address and an IPv6 address), which is not limited in this embodiment.

S202: The address space recommendation apparatus 103 determines, in response to the address space recommendation request, a first address space different from the second address space corresponding to the second VPC, where the first VPC and the second VPC have the first alliance relationship.

S203: The address space recommendation apparatus 103 outputs the first address space to the client 101.

During specific implementation, the address space recommendation apparatus 103 may parse out the identifier of the first alliance relationship from the address space recommendation request in response to the received address space recommendation request, and find an available address space corresponding to the first alliance relationship. The available address space is an address space that does not overlap with an address space used by any VPC in the first alliance relationship. In this way, the address space recommendation apparatus 103 may determine the first address space from the available address space, and allocate the first address space to the first VPC. For example, it is assumed that the first alliance relationship includes a VPC1 and a VPC2, all allocable IPv4 address spaces corresponding to the first alliance relationship are 128.1.0.1 to 191.254.255.254. In addition, the IPv4 address spaces allocated to the VPC1 are 128.1.0.1 to 150.255.255.255, and the IPv4 address spaces allocated to the VPC2 are 151.0.0.0 to 160.255.255.255. In this case, the remaining available IPv4 address spaces are 161.0.0.0 to 191.254.255.254. When the user applies for creating a new first VPC in the first alliance relationship, the service platform 102 may allocate, from the remaining available IPv4 address spaces 161.0.0.0 to 191.254.255.254, 161.0.0.0 to 165.254.255.254 as the first address space to the first VPC. In this way, the first address space determined by the address space recommendation apparatus 103 may not overlap with an address space used by each VPC in the first alliance relationship. It should be noted that, different address spaces described in step S202 specifically mean that the first address space does not overlap with the second address space, to avoid an address conflict between the first VPC and the second VPC.

In actual application, the available address space corresponding to the first alliance relationship may be stored in a first database (database, DB). The first database may be deployed locally in the service platform 102, so that the address space recommendation apparatus 103 may obtain the available address space corresponding to the first alliance relationship by accessing the local database of the service platform 102. Alternatively, the first database may be deployed independently of the service platform 102, for example, deployed on a cloud. This is not limited in this embodiment.

In some possible implementations, for each to-be-created or to-be-updated VPC, the address space recommendation apparatus 103 may allocate an address space of a fixed size to the VPC, or the address space recommendation apparatus 103 may alternatively specify an address space size by configuring the address constraint condition by the user. For example, when the user inputs the address constraint condition on the configuration interface, if the address constraint condition indicates an address space size (that is, a quantity of included addresses) allocated to the first VPC, the address space recommendation apparatus 103 may determine, from the available address space corresponding to the first alliance relationship, the first address space of a corresponding size.

Further, the address space recommendation apparatus 103 may further determine the first address space allocated to the first VPC by using a greedy algorithm, to reduce a fragmentation rate of the available address space corresponding to the first alliance relationship. Specifically, when a plurality of VPCs in the first alliance relationship are allocated to respective corresponding address spaces, the available address space corresponding to the first alliance relationship may include a plurality of inconsecutive address segments, so that the address space recommendation apparatus 103 may preferentially allocate the first address space from a smaller address segment to the first VPC. For example, it is assumed that the address space recommendation apparatus 103 finds, based on the identifier of the first alliance relationship, that the available address space corresponding to the first alliance relationship includes the first available address space and a second available address space that do not overlap. A size of the first available address space is less than a size of the second available address space. The address space recommendation apparatus 103 may preferentially determine, from the first available address space based on the address constraint condition, the first address space to be allocated to the first VPC. In this way, when a larger address space needs to be configured for another VPC that is subsequently created/updated, the address space recommendation apparatus 103 may allocate, from the relatively large second available address space, an address space required by the another VPC, to improve rationality of address space allocation and utilization of the address space.

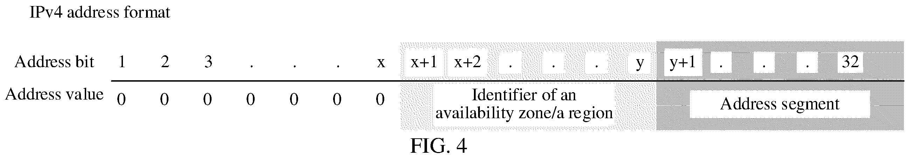

In another possible implementation, the address constraint condition configured by the user may alternatively indicate an address prefix allocated to the first VPC, so that the address space recommendation apparatus 103 may determine, from the available address space, the first address space satisfying the address prefix indicated by the address constraint condition, to satisfy a requirement of the user for the address space. In actual application, the address prefix specified by the user may be used as an identifier of a private network address segment of the user. Further, the address prefix may further identify an AZ or a region for implementing the VPC. The IPv4 address is used as an example. Each IPv4 address allocated to the first VPC may be represented by 32 bits (bits), as shown in FIG. 4. The first bit to the Y^{th} bit are prefixes of the IPv4 address, the first bit to the X^{th} bit (where X is a positive integer greater than 1) may identify the private network address segment of the user, the (X+1)^{th} bit to the Y^{th} bit may identify the AZ/region for implementing the VPC, and Y is a positive integer greater than or equal to X. When Y is greater than X, the prefix of each IPv4 address may carry identification information of the AZ or the region. When Y is equal to X, the prefix of each IPv4 address may not need to identify the AZ or the region. In addition, in a case in which the user specifies the address prefix, the address space recommendation apparatus 103 may alternatively preferentially determine an address space suitable for the first VPC from a smaller address segment based on a greedy algorithm.

In the foregoing implementation, an example in which the address space recommendation apparatus 103 determines the first address space when creating/updating the first VPC in the alliance relationship is used. In actual application, the service platform 102 may create/update different VPCs in a plurality of different alliance relationships for the user. In this case, when a VPC is created/updated in each alliance relationship, the address space recommendation apparatus 103 may determine, in the foregoing similar manner, an address space allocated to the VPC, and the allocated address space does not overlap with an address space allocated to another VPC in the alliance relationship. It should be noted that interconnection may not exist between VPCs in different alliance relationships. In other words, the VPCs in the different alliance relationships may be isolated from each other. Therefore, all allocable address spaces corresponding to each alliance relationship may overlap. For example, for an alliance relationship 1 and an alliance relationship 2 that are isolated from each other, all available IPv4 address spaces corresponding to the alliance relationship 1 may be 128.1.0.1 to 191.254.255.254, and all available IPv4 address spaces corresponding to the alliance relationship 2 may also be 128.1.0.1 to 191.254.255.254. Correspondingly, when a VPCa is created in the alliance relationship 1, the IPv4 address space allocated by the address space recommendation apparatus 103 to the VPCa may be 128.1.0.1 to 150.255.255.255; when a VPCb is created in the alliance relationship 2, the IPv4 address space allocated by the address space recommendation apparatus 103 to the VPCb may also be 128.1.0.1 to 150.255.255.255, or the like.

However, in other implementations, VPCs in different alliance relationships may be interconnected by using a part of VPCs. Specifically, when the address space recommendation request includes both the identifier of the first alliance relationship and an identifier of a second alliance relationship, it indicates that the first VPC belongs to both the first alliance relationship and the second alliance relationship. In this case, the first address space allocated by the address space recommendation apparatus 103 to the first VPC does not overlap with an address space corresponding to each VPC in the first alliance relationship, and does not overlap with an address space corresponding to each VPC in the second alliance relationship. For example, it is assumed that a user 1 may create the alliance relationship 1 and create a VPCa₁ and a VPCa₂ in the alliance relationship 1, and a user 2 may create the alliance relationship 2 and create a VPCbi and a VPCb₂ in the alliance relationship 2. When the user 1 expects that the VPCs in the alliance relationship 1 may be interconnected with the VPCs in the alliance relationship 2, the user 1 may create a VPCci in both the alliance relationship 1 and the alliance relationship 2. In this way, in the alliance relationship 1, the VPCci may be interconnected with the VPCa₁ and the VPCa₂, and in the alliance relationship 2, the VPCci may be interconnected with the VPCbi and the VPCb₂. In this way, data exchange between two alliance relationships may be implemented. It should be noted that, when the VPCci is created in the alliance relationship 1 and the alliance relationship 2, an address space allocated by the address space recommendation apparatus 103 to the VPCci does not overlap with address spaces allocated to the VPCa₁ and the VPCa₂ in the alliance relationship 1, and does not overlap with address spaces allocated to the VPCbi and the VPCb₂ in the alliance relationship 2.

In actual application, when the address space recommendation system 100 supports a plurality of users to respectively create/update VPCs in a plurality of alliance relationships, the address space recommendation system 100 may further manage information about the plurality of alliance relationships. Specifically, a second database may be further deployed in the address space recommendation system 100. The second database may be deployed locally on the service platform 102, or may be deployed on the cloud. In addition, the second database may be configured to store related information of each alliance relationship, such as an identifier of the alliance relationship, an identifier of each VPC in the alliance relationship, a user to which the VPC belongs, and an address space allocated to the VPC, so that the address space recommendation system 100 may obtain, by accessing the second database, related information of the alliance relationship belonging to each user, to perform operations and maintenance on a VPC of each user based on the information and facilitate the user to query information about the alliance relationship.

After outputting the first address space, the address space recommendation apparatus 103 may feed back the first address space to the service platform 102. Therefore, the service platform 102 may directly configure the address space of the first VPC as the first address space, and present the first address space to the user via the client 101, so that the user learns of the address space configured by the service platform 102 for the first VPC. In a further possible implementation, before determining to configure the address space for the first VPC, the user may further determine whether the address space of the first VPC is the first address space. Specifically, this embodiment may include the following steps.

S204: The service platform 102 provides a recommendation interface, where the recommendation interface is presented to the user via the client 101, and the recommendation interface includes the first address space output by the address space recommendation apparatus 103.

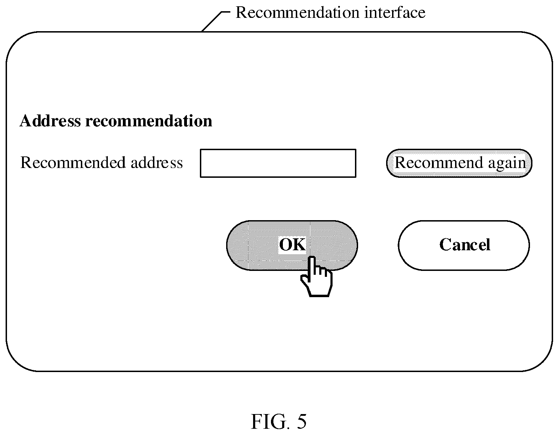

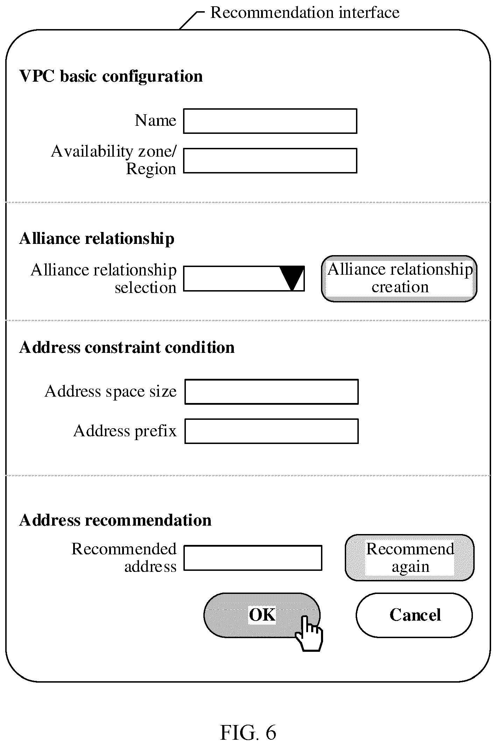

In a possible example, the service platform 102 may provide the recommendation interface shown in FIG. 5. The recommendation interface includes the first address space recommended to the user. In addition, the recommendation interface may further include an "OK" control and a "Recommend again" control. In actual application, the recommendation interface shown in FIG. 5 and the configuration interface shown in FIG. 3 may be two independent interfaces, or may be combined into a same interface. As shown in FIG. 6, when performing corresponding configuration on the to-be-created/updated first VPC on the interface, the user may further view an address space automatically recommended by the address space recommendation system 100. This is not limited in this embodiment. When the user taps the "OK" control on the recommendation interface, the service platform 102 determines to configure the address space of the first VPC as the first address space. When the user taps the "Recommend again" control on the recommendation interface (for example, the currently recommended first address space does not conform to future planning of the user for the address space), the service platform 102 may indicate the address space recommendation apparatus 103 to re-determine an address space for the first VPC. In this case, the address space recommendation apparatus 103 may further perform the following steps.

S205: The address space recommendation apparatus 103 determines the second address space in response to a change operation performed by the user for the first address space, where the second address space does not overlap with the first address space, and the second address space does not overlap with the address space corresponding to each VPC in the first alliance relationship.

S206: The address space recommendation apparatus 103 outputs the second address space to the client 101.

The change operation performed by the user for the first address space may be, for example, the foregoing operation of tapping the "Recommend again", or may be another operation of triggering the address space recommendation apparatus 103 to re-recommend an address space. This is not limited in this embodiment.

When the user requests to re-recommend an address space, the address space recommendation apparatus 103 may re-find, from the available address space corresponding to the first alliance relationship, the second address space that does not overlap with the first address space. A specific implementation of determining the second address space by the address space recommendation apparatus 103 is similar to the specific implementation of determining the first address space. For details, refer to related descriptions in the foregoing embodiment. It should be noted that, the re-found second address space still needs to satisfy a basic requirement that the second address space does not overlap with the address space allocated to the another VPC in the alliance relationship. In actual application, before the user requests to re-recommend the address space, the user may further input address information (such as an address prefix, an address space size, and address continuity) to the service platform 102, and the address space recommendation apparatus 103 outputs a second address space that satisfies the address information, so that the re-recommended second address space can satisfy the user's expectation.

After the address space recommendation apparatus 103 outputs the second address space, the service platform 102 may present the second address space on the recommendation interface shown in FIG. 5 or FIG. 6, so that the user further determines whether to configure the address space of the first VPC as the second address space. After the user taps the "OK" control on the recommendation interface, the service platform 102 determines to configure the address space of the first VPC as the second address space. After the user taps the "Recommend again" control on the recommendation interface, the service platform 102 may recommend a new address space to the user again.

Further, when the user releases one or more VPCs in the first alliance relationship, the address space recommendation apparatus 103 may further reclaim the address space, and specifically, release the address space already allocated to the first VPC, and add the address space as an available address space to the first database. In this way, when the user subsequently creates or updates the VPC, the address space recommendation apparatus 103 may allocate the address space from the first database to the to-be-created or to-be-updated VPC.

It should be noted that, in this embodiment, an implementation process of automatically recommending the address space is described by using an example in which the address space recommendation apparatus 103 and the service platform 102 are used as two independent entities. In another embodiment, the address space recommendation apparatus 103 may alternatively be deployed in the service platform 102. In this case, some or all actions performed by the service platform 102 in the foregoing embodiment are specifically performed by the address space recommendation apparatus 103. This is not limited in this embodiment.

In addition, in this embodiment, an example in which the address space recommendation apparatus 103 automatically recommends the available address space for the VPC is used. In another possible embodiment, the address space recommendation apparatus 103 may alternatively automatically recommend an available address space for a microservice that the user requests to create or update. A specific implementation thereof is similar to the specific process of automatically recommending the available address space for the VPC described in the foregoing embodiment. For understanding, refer to the foregoing process. Details are not described herein again.

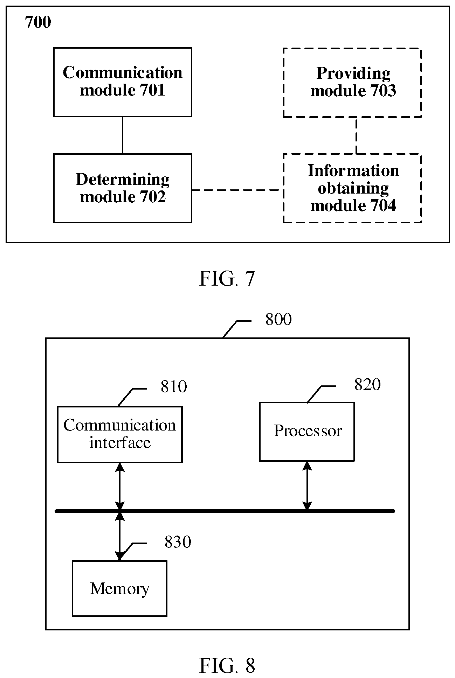

The foregoing describes in detail the address space recommendation method provided in this application with reference to FIG. 1 to FIG. 6. The following describes an apparatus and a device provided in this application with reference to FIG. 7 and FIG. 8.

Based on a same inventive concept as the foregoing method, an embodiment of this application further provides an address space recommendation apparatus. The address space recommendation apparatus may implement a function of an address space recommendation apparatus 103 in the embodiment shown in FIG. 2. Refer to FIG. 7. The address space recommendation apparatus 700 may include:
a communication module 701, configured to obtain an address space recommendation request sent by a client for a first virtual private cloud VPC, where the address space recommendation request includes an identifier of a first alliance relationship; and
a determining module 702, configured to determine, in response to the address space recommendation request, a first address space different from a second address space corresponding to a second VPC, where the first VPC and the second VPC have the first alliance relationship, where
the communication module 701 is further configured to output the first address space to the client.

In a possible implementation, if the address space recommendation request further includes an address constraint condition, the first address space satisfies the address constraint condition.

In a possible implementation, the address constraint condition indicates an address space size, and the determining module 702 is configured to:
determine a first available address space and a second available address space in the first alliance relationship based on the identifier of the first alliance relationship in the address space recommendation request, where a size of the first available address space is less than a size of the second available address space; and
determine the first address space from the first available address space based on the address constraint condition in the address space recommendation request.

In a possible implementation, the address space recommendation apparatus 700 further includes:
a providing module 703, configured to provide a configuration interface, where the configuration interface is presented to a user via the client; and
an information obtaining module 704, configured to obtain the identifier of the first alliance relationship and the address constraint condition in response to a configuration operation performed by the user on the configuration interface for the first VPC.

In a possible implementation, the address space recommendation request further includes an identifier of a second alliance relationship; and
the first address space does not overlap with an address space corresponding to each VPC in the first alliance relationship, and the first address space does not overlap with an address space corresponding to each VPC in the second alliance relationship.

In a possible implementation, the providing module 703 is further configured to:
provide a recommendation interface, where the recommendation interface is presented to the user via the client, and the recommendation interface includes the first address space.

In a possible implementation, the determining module 702 is further configured to determine the second address space in response to a change operation performed by the user for the first address space, where the second address space does not overlap with the first address space, and the second address space does not overlap with the address space corresponding to each VPC in the first alliance relationship; and
the communication module 701 is further configured to output the second address space to the client.

The address space recommendation apparatus 700 in this embodiment corresponds to the address space recommendation method shown in FIG. 2. Therefore, for a specific implementation of each function module in the address space recommendation apparatus 700 in this embodiment and technical effects thereof, refer to related descriptions in the embodiment shown in FIG. 2, and details are not described herein again.

In addition, an embodiment of this application further provides a computing device. As shown in FIG. 8, the computing device 800 may include a communication interface 810 and a processor 820. Optionally, the computing device 800 may further include a memory 830. The memory 830 may be disposed inside the computing device 800, or may be disposed outside the computing device 800. For example, all actions performed by an address space recommendation apparatus 103 in the embodiment shown in FIG. 2 may be implemented by the processor 820. The processor 820 may obtain an address space recommendation request by using the communication interface 810, and is configured to implement any method performed in FIG. 2. In an implementation process, steps of a processing procedure may be performed by using an integrated logic circuit of hardware in the processor 820 or instructions in a form of software to complete the method performed in FIG. 2. For brevity, details are not described herein again. Program code executed by the processor 820 to implement the foregoing method described above may be stored in the memory 830. The memory 830 is connected to the processor 820, for example, by coupling.

Some features in this embodiment of this application may be implemented/supported by the processor 820 by executing program instructions or software code in the memory 830. Software components loaded on the memory 830 may be summarized in terms of functions or logic, for example, the determining module 702, the providing module 703, and the information obtaining module 704 shown in FIG. 7. A function of the communication module 701 may be implemented by the communication interface 810.

Any communication interface in embodiments of this application may be a circuit, a bus, a transceiver, or another apparatus that may be configured to exchange information. For example, the communication interface 810 in the computing device 800. For example, the another apparatus may be a device connected to the computing device 800.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

The coupling in embodiments of this application is indirect coupling or a communication connection between apparatuses or modules for information exchange between the apparatuses or the modules, and may be in electrical, mechanical, or another form.

The processor may perform an operation in collaboration with the memory. The memory may be a non-volatile memory, such as a hard disk drive (hard disk drive, HDD) or a solid-state drive (solid-state drive, SSD), or may be a volatile memory (volatile memory), such as a random-access memory (random-access memory, RAM). The memory is any other medium that can carry or store expected program code in a form of an instruction or a data structure and that can be accessed by a computer, but is not limited thereto.

A specific connection medium between the communication interface, the processor, and the memory is not limited in embodiments of this application. For example, the memory, the processor, and the communication interface may be connected through a bus. The bus may be classified into an address bus, a data bus, a control bus, and the like.

Based on the foregoing embodiments, an embodiment of this application further provides a computer storage medium. The storage medium stores a software program. When the software program is read and executed by one or more processors, the method performed by the address space recommendation apparatus 103 provided in any one or more of the foregoing embodiments may be implemented. The computer storage medium may include any medium that can store program code, such as a USB flash drive, a removable hard disk, a read-only memory, a random-access memory, a magnetic disk, or an optical disc.

Based on the foregoing embodiments, an embodiment of this application further provides a chip. The chip includes a processor, configured to implement a function of the address space recommendation apparatus 103 in the foregoing embodiments, for example, configured to implement the method performed by the address space recommendation apparatus 103 in FIG. 2. Optionally, the chip further includes a memory, and the memory is configured to store necessary program instructions and data executed by the processor. The chip may include a chip, or include a chip and another discrete device.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided to a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may also be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

In the specification, claims, and accompanying drawings of this application, the terms "first", "second", and so on are intended to distinguish between similar objects but do not necessarily indicate a particular order or sequence. It should be understood that the terms used in such a way are interchangeable in proper cases, which is merely a discrimination manner that is used when objects having a same attribute are described in embodiments of this application.

Apparently, a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

## Claims

1. An address space recommendation method, wherein the method comprises:
obtaining an address space recommendation request sent by a client for a first virtual private cloud VPC, wherein the address space recommendation request comprises an identifier of a first alliance relationship;
determining, in response to the address space recommendation request, a first address space different from a second address space corresponding to a second VPC, wherein the first VPC and the second VPC have the first alliance relationship; and
outputting the first address space to the client.

2. The method according to claim 1, wherein the address space recommendation request further comprises an address constraint condition, and the first address space satisfies the address constraint condition.

3. The method according to claim 2, wherein the address constraint condition indicates an address space size, and the determining, in response to the address space recommendation request, a first address space different from a second address space corresponding to a second VPC comprises:
determining a first available address space and a second available address space in the first alliance relationship based on the identifier of the first alliance relationship in the address space recommendation request, wherein a size of the first available address space is less than a size of the second available address space; and
determining the first address space from the first available address space based on the address constraint condition in the address space recommendation request.

4. The method according to claim 2 or 3, wherein the method further comprises:
providing a configuration interface, wherein the configuration interface is presented to a user via the client; and
obtaining the identifier of the first alliance relationship and the address constraint condition in response to a configuration operation performed by the user on the configuration interface for the first VPC.

5. The method according to any one of claims 1 to 4, wherein the address space recommendation request further comprises an identifier of a second alliance relationship; and the first address space does not overlap with an address space corresponding to each VPC in the first alliance relationship, and the first address space does not overlap with an address space corresponding to each VPC in the second alliance relationship.

6. The method according to any one of claims 1 to 5, wherein the method further comprises:
providing a recommendation interface, wherein the recommendation interface is presented to the user via the client, and the recommendation interface comprises the first address space.

7. The method according to claim 6, wherein the method further comprises:
determining the second address space in response to a change operation performed by the user for the first address space, wherein the second address space does not overlap with the first address space, and the second address space does not overlap with the address space corresponding to each VPC in the first alliance relationship; and
outputting the second address space to the client.

8. An address space recommendation apparatus, wherein the apparatus comprises:
a communication module, configured to obtain an address space recommendation request sent by a client for a first virtual private cloud VPC, wherein the address space recommendation request comprises an identifier of a first alliance relationship; and
a determining module, configured to determine, in response to the address space recommendation request, a first address space different from a second address space corresponding to a second VPC, wherein the first VPC and the second VPC have the first alliance relationship, wherein
the communication module is further configured to output the first address space to the client.

9. The apparatus according to claim 8, wherein the address space recommendation request further comprises an address constraint condition, and the first address space satisfies the address constraint condition.

10. The apparatus according to claim 9, wherein the address constraint condition indicates an address space size, and the determining module is configured to:
determine a first available address space and a second available address space in the first alliance relationship based on the identifier of the first alliance relationship in the address space recommendation request, wherein a size of the first available address space is less than a size of the second available address space; and
determine the first address space from the first available address space based on the address constraint condition in the address space recommendation request.

11. The apparatus according to claim 9 or 10, wherein the apparatus further comprises:
a providing module, configured to provide a configuration interface, wherein the configuration interface is presented to a user via the client; and
an information obtaining module, configured to obtain the identifier of the first alliance relationship and the address constraint condition in response to a configuration operation performed by the user on the configuration interface for the first VPC.

12. The apparatus according to any one of claims 8 to 11, wherein the address space recommendation request further comprises an identifier of a second alliance relationship; and the first address space does not overlap with an address space corresponding to each VPC in the first alliance relationship, and the first address space does not overlap with an address space corresponding to each VPC in the second alliance relationship.

13. The apparatus according to any one of claims 8 to 12, wherein the providing module is further configured to:
provide a recommendation interface, wherein the recommendation interface is presented to the user via the client, and the recommendation interface comprises the first address space.

14. The apparatus according to claim 13, wherein the determining module is further configured to determine the second address space in response to a change operation performed by the user for the first address space, wherein the second address space does not overlap with the first address space, and the second address space does not overlap with the address space corresponding to each VPC in the first alliance relationship; and
the communication module is further configured to output the second address space to the client.

15. A computing device, wherein the device comprises a processor and a memory; and the processor is configured to execute instructions stored in the memory, so that the computing device performs the method according to any one of claims 1 to 7.

16. A computer-readable storage medium, comprising instructions, wherein the instructions are used to implement the method according to any one of claims 1 to 7.

17. A computer program product comprising instructions, wherein when the computer program product runs on a computing device, the computing device is enabled to perform the method according to any one of claims 1 to 7.
